# EUROPEAN PATENT APPLICATION

(11) **EP 2 654 383 A2**
(43) Date of publication of application: **23.10.2013**
(21) Application number: 13164390.0
(22) Date of filing: 19.04.2013
(51) Int. Cl.: H05B 37/02

(54) **Light adjusting circuit**

(30) Priority: 20.04.2012 TW 101114184
(71) Applicant: Midas Wei Trading Co., Ltd., Taipei, Taiwan (TW); Champion Elite Company Limited, Tortola (VG)
(72) Inventor: Wei, Tao-Chin, Taipei City (TW); Yu, Kuo-Yi, Taipei (TW)
(74) Representative: Hintermeyer, Julia

(57) **Abstract**

A light adjusting circuit, it provide power required for an overall operation of light adjusting circuit, and it utilizes a light adjusting controller to perform light adjusting of load. During light adjusting, in case operating voltage of a driving controller is equal to or greater than a threshold value, then a rectifier or a power controller provides a first power supply to driving controller through an AC voltage adjusted by light adjusting controller, so that it can regulate a driving voltage through power controller based on DC voltage variation, to drive a load. Otherwise, in case operating voltage of driving controller is less than threshold value, it is switched to a battery to provide a second power supply to driving controller, to make it have stable operating voltage, control power controller to output driving voltage to load, to eliminate blinking of load when conduction angle is small.

## Description

### BACKGROUND OF THE INVENTION

### Field of the Invention

The present invention relates to a light adjusting circuit, and in particular to a light adjusting circuit, that utilizes a built-in battery to supply a driving controller with sufficient operating voltage, to stabilize the operation of load.

### THE PRIOR ARTS

Nowadays, the use of light for illumination has played an indispensable role in our daily life, so that people may see things clearly, to bring convenience to our life and work. In order to provide sufficient illumination at night or in darkness, light illumination products are used extensively. For this reason, power consumption for illumination purpose has occupied a high percentage of total power consumption. In recent years, energy conservation and environment protection have got most of the attention. In order to take energy conservation, economic development, and environment protection into balanced consideration, and also due to raise of our living standard, the design of an un-adjustable illumination is not sufficient, such that the demand for adjustable light illumination has brought about the development of adjustable illumination device.

In the design of the conventional adjustable illumination device, pure resistor load is used, such as for the incandescent lamp or the halogen lamp. In this respect, the incandescent lamp is taken as example for explanation. Wherein, a light adjusting device is connected in series to the incandescent lamp to perform light adjustment. The light adjusting device is mainly made of silicon-controlled element, such as Triode for Alternating Current (TRIAC). In the TRIAC, through adjusting the trigger voltage applied on the silicon-controlled element, the conduction angle of the silicon-controlled element can be varied, so as to adjust the AC voltage applied on the incandescent lamp, to regulate the illumination of the incandescent lamp.

In order to reduce power consumption and conserve energy, more and more light fixtures utilize LED or energy saving light bulb as illumination element to replace the conventional incandescent lamp. However, the driving controller for most of the illumination elements utilize Integrated Circuit (IC) to control turned-on (ON) and turned-off (OFF) of the illumination element. For the IC to operate normally, a stable DC operating voltage (Supply Voltage, Vcc) is required. When Vcc is greater than the turn-on voltage of IC, the IC is able to operate normally. On the contrary, when Vcc is less than the turn-off voltage of IC, the IC will stop operation. In general, the turn-on voltage of IC is between 8.1V and 9.9V, while the turn-off voltage is between 7.2V and 8.8V. Usually, the operating voltage of the driving controller can be derived from a voltage drop across a resistor connected in series with a rectifier, or from an auxiliary power supply provided by a power controller.

When the existing TRIAC light adjusting circuit is applied to LED or energy saving light bulb, the DC operating voltage of the driving controller can be varied depending on the conduction angle of the TRIAC. Also, when the conduction angle of the TRIAC is reduced, the DC operating voltage Vcc of IC can be varied between the turn-on and the turn-off voltages. At this time, the IC will enter into a state of repeated turn-ons and the turn-offs, to cause blinking of the illumination element.

In addition, the conduction angles of TRIAC for various manufacturers may be different. By way of example, when a TRIAC of a manufacturer A is adjusted so that the light bulb will not blink, and in case the TRIAC is replaced with that of a manufacturer B, due to the conduction angle problem, the light bulb will start to blink. Therefore, in adjusting a lamp, how to make the illumination variation stable without causing blinking, is a problem that has to be solved urgently in this field.

Therefore, presently, the design and performance of light adjusting circuit is not quite satisfactory, and it has much room for improvements.

### SUMMARY OF THE INVENTION

In view of the problems and drawbacks of the prior art, the present invention provides a light adjusting circuit, to overcome effectively the problem of the prior art.

A major objective of the present invention is to provide a light adjusting circuit. Wherein, an embedded battery is provided to supply enough power, so that during light adjusting, the light adjusting controller of small conduction angle is still capable of keeping illumination variations stable.

Another objective of the present case is to provide a light adjusting circuit, that is applicable to various illumination devices, to provide high efficiency, long service life, without causing blinking.

In order to achieve the above mentioned objective, the present invention provides a light adjusting circuit, including: a light adjusting controller, a rectifier, a power controller, a driving controller, and a battery. Wherein, the light adjusting controller is used to receive a first AC voltage and an illumination regulation signal, to regulate the first AC voltage based on the illumination regulation signal, to output a second AC voltage. The rectifier is connected to the light adjusting controller, to convert the second AC voltage into a DC voltage. The power controller is connected to the rectifier and a load, to receive the DC voltage and output a driving voltage to drive the load. The driving controller is connected to the rectifier and the power controller, so that when the operating voltage of the driving controller is equal to or greater than a threshold value, the rectifier or the power controller will provide a first power supply to the driving controller by means of the second AC voltage, to regulate the driving voltage through the power controller as based on the DC voltage variations. The battery is connected to the driving controller, and it provides a second power supply to the driving controller, when its operating voltage is less than the threshold value, to regulate the driving voltage through the power controller.

Further scope of the applicability of the present invention will become apparent from the detailed descriptions given hereinafter. However, it should be understood that the detailed descriptions and specific examples, while indicating preferred embodiments of the present invention, are given by way of illustration only, since various changes and modifications within the spirit and scope of the present invention will become apparent to those skilled in the art from this detailed descriptions.

### BRIEF DESCRIPTION OF THE DRAWINGS

The related drawings in connection with the detailed descriptions of the present invention to be made later are described briefly as follows, in which:

Fig. 1 is a schematic diagram of a light adjusting circuit according to a first embodiment of the present invention;

Fig. 2 is a light adjusting waveform diagram according to the present invention; and

Fig. 3 is a schematic diagram of a light adjusting circuit according to a second embodiment of the present invention.

### DETAILED DESCRIPTION OF THE PREFERRED EMBODIMENT

The purpose, construction, features, functions and advantages of the present invention can be appreciated and understood more thoroughly through the following detailed descriptions with reference to the attached drawings.

In many applications, light adjusting capability is quite important, since it can make illumination of the lamp meet the requirement of the environment. The light adjusting circuit of the present invention is capable of attaining the function of adjusting lamp illumination from total darkness to total brightness, while conserving power consumption. The present invention provides this new type of light adjusting circuit, to improve the deficiency of lamp blinking of the prior art for the TRIAC of small conduction angle, while adjusting illumination.

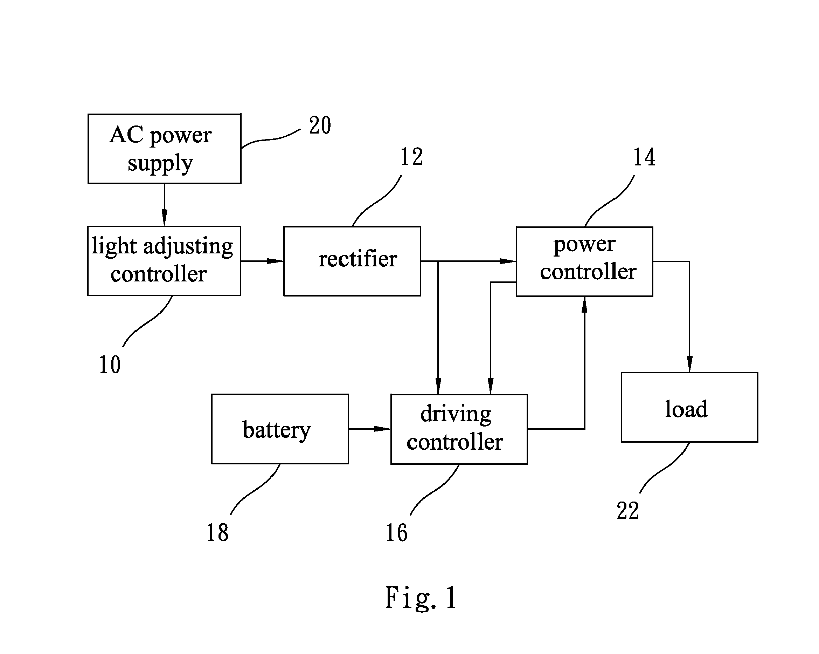

Firstly, refer to Fig. 1 for a schematic diagram of a light adjusting circuit according to a first embodiment of the present invention. As shown in Fig. 1, the light adjusting circuit includes: a light adjusting controller 10, a rectifier 12, a power controller 14, a driving controller 16, and a battery 18. The light adjusting controller 10 is connected electrically to an AC power supply 20, such as a local power supply, such that the light adjusting controller 10 receives a first AC voltage from the AC power supply 20, and an illumination regulation signal from the light adjusting controller 10 controlled by a user. Wherein, the light adjusting controller 10 is a Triode for Alternating Current (TRIAC), and it utilizes the characteristics of the gate current to regulate the conduction angle in a phase control approach. Therefore, the illumination regulation signal is a voltage conduction angle variation signal. In this way, the light adjusting controller 10 regulates the first AC voltage based on the illumination regulation signal, to output a second AC voltage.

The rectifier 12 is connected to the light adjusting controller 10, it rectifies and filters the second AC voltage and converts it into a DC voltage. The power controller 14 is connected to an output terminal of the rectifier 12 and a load 22. The power controller 14 receives the DC voltage, and outputs a driving voltage to drive the load 22 into operation. Wherein, the load 22 can be an energy saving light bulb, a light-emitting-diode (LED), or a gas discharge lamp. The driving controller 16 is connected to the rectifier 12, the power controller 14, and the battery 18. Since IC is utilized in the driving controller 16, it requires stable operating voltage to operate. In general, the turn-on voltage of IC is between 8.1V ∼ 9.9V, while the turn-off voltage of IC is between 7.2V and 8.8V, so that the driving controller 16 may regulate the driving voltage through the power controller 14, and provide it to the load 22, to control stably the lamp illumination. Therefore, the present invention utilizes two kinds of power supply, to raise the stability of operating voltage of the driving controller 16, and that will be described in detail later.

The operating voltage of the driving controller 16 can be varied along with the illumination regulation signal of the light adjusting controller 10. As such, when the operating voltage of the driving controller 16 is equal to or greater than a threshold value, for example, the turn-on voltage 8.1V ∼ 9.9V of the driving controller 16, at this time, the voltage conduction angle of the light adjusting controller 10 is sufficiently large, such that the rectifier 12 or the power controller 14 may provide a first power supply to the driving controller 16 by means of a second AC voltage. As such, the driving controller 16 is able to regulate the driving voltage through the power controller 14 as based on DC voltage variations, to control the illuminations of the load 22. It is worth to note that, when the conduction angle of the light adjusting controller 10 is reduced, so that the operating voltage of the driving controller 16 is less than a threshold value, for example, the turn-off voltage 7.2 V ∼ 8.8V of the driving controller 16, at this time, the operating voltage of the driving controller 16 will be varied repeatedly between the turn-on voltage and the turn-off voltage, thus it can not operate stably, to cause the problem of load blinking. Therefore, when the operating voltage of the driving controller 16 is less than a threshold value, the battery 18 is used to provide a second power supply to the driving controller 16, so that it may regulate the driving voltage through the power controller 14. As such, even the DC voltage (namely the conduction angle) of the light adjusting controller 10 is rather low, yet it can still make the driving controller 16 to maintain normal operations.

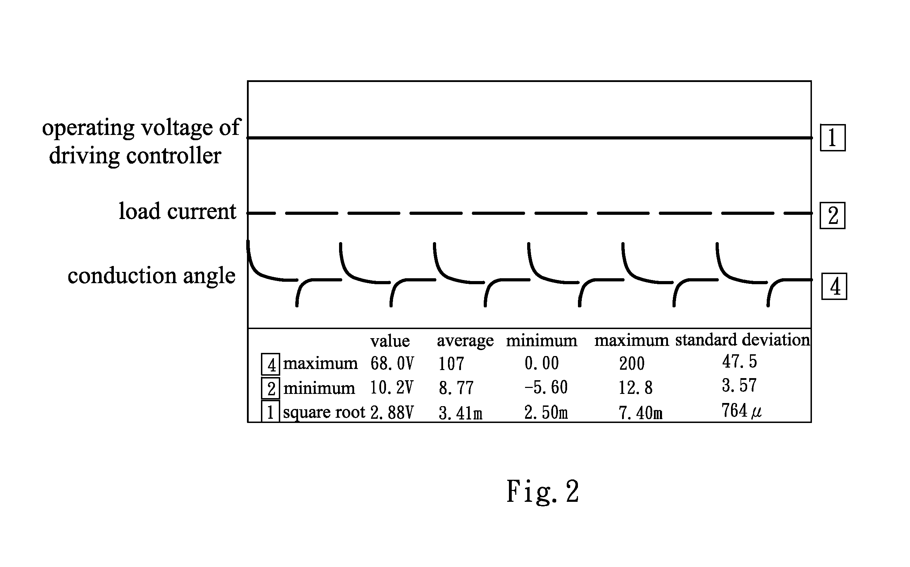

Usually, the operating voltage of the driving controller 16 is between 7.2V and 8.8V, that could cause the lowest illumination of the load 22, even the disappearance of illumination, namely, to make it in a turn-off state. Therefore, in the present invention, a battery 18 is additionally added, to provide a second power supply to the driving controller 16, to stabilize its operating voltage, to solve the blinking problem of the load. Furthermore, when the conduction angle of the light adjusting controller 10 is reduced to its minimum, as shown in Fig. 2, a battery 18 is used to provide a second power supply, to ensure that the driving controller 16 is able to operate stably, even when the first power supply is lower than the turn-off voltage. Through the output power regulation of the power controller, the power supplied to the load 22 can be reduced to 0.1w without causing load blinking problem. As such, in the present invention, the regulation range of load illumination can be wider and more stable than that of the prior art. Moreover, the light adjusting circuit is applicable to various illumination devices, to provide higher illumination efficiency, longer service life, and without causing blinking.

The present invention is suitable to use in the light adjusting controller 10 of various manufacturers, and it will not cause load blinking due to different conduction angles of the light adjusting controllers 10 of different manufacturers. Since in the prior art, for the light adjusting controller 10 of a manufacturer A, when its conduction angle is adjusted to the minimum, the load 22 will not blink. However, when it is changed to the light adjusting controller 10 of a manufacturer B, due to the problem of different conduction angle, its operating voltage tends to be unstable to cause the load 22 to blink. At this time, the light adjusting circuit of the present invention can be applied, to switch the operating voltage of the driving controller 16 to be supplied by a battery 18, to avoid the problem of load blinking due to unstable operating voltage. As such, the design of the present invention is applicable to the light adjusting controller of various manufacturers, to eliminate effectively the deficiency of light blinking of the prior art.

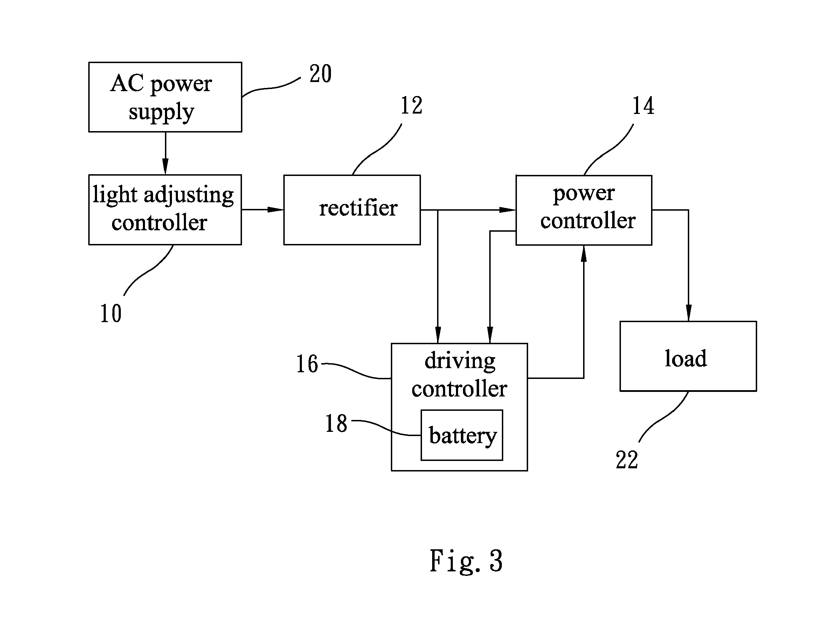

Finally, refer to Fig. 3 for a schematic diagram of a light adjusting circuit according to a second embodiment of the present invention. The difference between the second embodiment and the first embodiment is that, in the second embodiment, the battery 18 can be incorporated into the driving controller 16. When the operating voltage of the driving controller 16 is equal to or greater than a threshold value, a first power supply is provided to the driving controller 16 through a rectifier 12 or a power controller 14. At this time, the first power supply is used to charge the battery 18 at the same time. As such, it can raise the applicability of the added battery, and the operation stability of the entire light adjusting circuit.

Summing up the above, in the present invention, two approaches are used to provide the driving controller sufficient operating voltage, so that it can control and regulate more stably the illumination variations of the load, through using the power controller to regulate the driving voltage, as based on the DC voltage variations of the rectifier. In this way, the present invention is effective in solving the deficiency of load (lamp) blinking of the prior art, its power regulation scope is more flexible, and it can be applicable to the various illumination devices, thus having a good competitive edge in the market.

The above detailed description of the preferred embodiment is intended to describe more clearly the characteristics and spirit of the present invention. However, the preferred embodiments disclosed above are not intended to be any restrictions to the scope of the present invention. Conversely, its purpose is to include the various changes and equivalent arrangements which are within the scope of the appended claims.

## Claims

1. A light adjusting circuit, comprising:
a light adjusting controller, used to receive a first AC voltage and an illumination regulation signal, to regulate said first AC voltage based on said illumination regulation signal, and to output a second AC voltage;
a rectifier, connected to said light adjusting controller, to convert said second AC voltage into a DC voltage;
a power controller, connected to said rectifier and a load, to receive said DC voltage and output a driving voltage to drive said load;
a driving controller, connected to said rectifier and said power controller, so that when operating voltage of said driving controller is equal to or greater than a threshold value, said rectifier or said power controller provides a first power supply to said driving controller by means of said second AC voltage, to make said driving controller regulate said driving voltage through said power controller as based on DC voltage variations; and
a battery, connected to said driving controller, and it provides a second power supply to said driving controller, when its operating voltage is less than said threshold value, to regulate said driving voltage through said power controller.

2. The light adjusting circuit as claimed in claim 1, wherein said first power supply is a DC power supply.

3. The light adjusting circuit as claimed in claim 1, further comprising an AC power supply, connected to said light adjusting controller, to provide said first AC voltage to said light adjusting controller.

4. The light adjusting circuit as claimed in claim 1, wherein a range of said threshold value is 7.2V to 8.8V.

5. The light adjusting circuit as claimed in claim 1, wherein when said operating voltage of said driving controller is equal to or greater than said threshold value, said battery is charged by said first power supply at the same time.

6. The light adjusting circuit as claimed in claim 1, wherein said battery is incorporated into said driving controller.

7. The light adjusting circuit as claimed in claim 1, wherein said battery is a rechargeable battery.

8. The light adjusting circuit as claimed in claim 1, wherein said illumination regulation signal is a voltage conduction angle variation signal.

9. The light adjusting circuit as claimed in claim 1, wherein said load is an energy saving light bulb, a light-emitting-diode (LED), or a gas discharge lamp.

10. The light adjusting circuit as claimed in claim 1, wherein said light adjusting controller is a Triode for Alternating Current (TRIAC).
